# EUROPEAN PATENT APPLICATION

(11) **EP 3 103 327 A1**
(43) Date of publication of application: **14.12.2016**
(21) Application number: 16173402.5
(22) Date of filing: 07.06.2016
(51) Int. Cl.: A01G 7/06

(54) **METHOD AND APPARATUS FOR ADJUSTING PLANT GROWTH ENVIRONMENT**

(30) Priority: 10.06.2015 CN 201510317290
(71) Applicant: Xiaomi Inc., Beijing 100085 (CN)
(72) Inventor: WU, Ke, Beijing (CN); LIU, Xinyu, Beijing (CN)
(74) Representative: Perrot, Emilie

(57) **Abstract**

The present invention relates to a method and an apparatus for adjusting a plant growth environment, to improve adaptability of a plant to different environments. The method includes: determining (S101) a standard cultivation curve of a plant cultivated in a flower pot; adjusting (S102) the standard cultivation curve according to an environmental parameter of an environment where the flower pot is located, to obtain an adjusted cultivation curve; and adjusting (S103) the growth environment of the plant according to the adjusted cultivation curve.

## Description

This application is based upon and claims priority to Chinese Patent Application No. 201510317290.7, filed on June 10, 2015, the entire contents of which are incorporated herein by reference.

The present invention relates to the field of Internet technologies, and more particularly, to a method and an apparatus for adjusting a plant growth environment.

### BACKGROUND

With the advancement of living quality, users are imposing higher and higher requirements on living environments. Cultivating flowers and plants in rooms not only beautifies the living environments, but also improves the air quality in the rooms. However, due to restriction of the cultivation conditions, the plants are generally cultivated in flower pots. The flower pots are subjected to different environments due to their different locations. For example, plants that are cultivated in balconies generally enjoy a relatively long light irradiation duration, whereas plants that are cultivated at corners of bedrooms are subjected to a relatively short light irradiation duration. Therefore, when the users fail to cultivate the plants according to the growth habits thereof, those plants would gradually wither to death due to inadaptability to their environments. For the users, buying plants again increases the economic cost. In addition, ill growth of the plants also reduces the users' enthusiasm in cultivating flowers and plants.

### SUMMARY

To solve the problems existent in the prior art, embodiments of the present invention provide a method and an apparatus for adjusting a plant growth environment, to improve adaptability of plants to different environments.

According to a first aspect, the invention relates to a method for adjusting a plant growth environment. The method comprises:
determining a standard cultivation curve of a plant cultivated in a flower pot;
adjusting the standard cultivation curve according to an environmental parameter of an environment where the flower pot is located, to obtain an adjusted cultivation curve; and
adjusting the growth environment of the plant according to the adjusted cultivation curve.

In one embodiment, the step of determining a standard cultivation curve of a plant cultivated in a flower pot may comprise:
determining a plant variety of the plant cultivated in the flower pot; and
downloading a standard cultivation curve corresponding to the plant variety from a plant database in a cloud-end server according to the plant variety.

In one embodiment, the standard cultivation curve comprises a sunshine irradiation duration curve, the environmental parameter comprises a current sunshine irradiation duration of the environment where the plant is located, and the step of adjusting the standard cultivation curve according to an environmental parameter of an environment where the flower pot is located may comprise:
determining the current sunshine irradiation duration of the environment at the location of the flower pot; and
adjusting the sunshine irradiation duration curve according to the current sunshine irradiation duration.

In one embodiment, the standard cultivation curve comprises a temperature variation curve, the environmental parameter comprises a current temperature range of the environment where the plant is located, and the step of adjusting the standard cultivation curve according to an environmental parameter of an environment where the flower pot is located may comprise:
determining the current temperature range of the environment at the location of the flower pot; and
adjusting the temperature variation curve according to the current temperature range.

In one embodiment, the standard cultivation curve comprises a normal humidity curve, the environmental parameter comprises a current humidity range of the environment where the plant is located, and the step of adjusting the standard cultivation curve according to an environmental parameter of an environment where the flower pot is located may comprise:
determining the current humidity range of the environment at the location of the flower pot; and
adjusting the normal humidity curve according to the current humidity range.

According to a second aspect, the invention relates to an apparatus for adjusting a plant growth environment. The apparatus comprises:
a determining module, configured to determine a standard cultivation curve of a plant cultivated in a flower pot;
a first adjusting module, configured to adjust the standard cultivation curve determined by the determining module according to an environmental parameter of an environment where the flower pot is located, to obtain an adjusted cultivation curve; and
a second adjusting module, configured to adjust the growth environment of the plant according to the cultivation curve adjusted by the first adjusting module.

In one embodiment, the determining module may comprise:
a first determining submodule, configured to determine a plant variety of the plant cultivated in the flower pot; and
a downloading submodule, configured to download a standard cultivation curve corresponding to the plant variety from a plant database in a cloud-end server according to the plant variety determined by the first determining submodule.

In one embodiment, the standard cultivation curve comprises a sunshine irradiation duration curve, the environmental parameter comprises a current sunshine irradiation duration of the environment where the plant is located, and the first adjusting module may comprise:
a second determining submodule, configured to determine the current sunshine irradiation duration of the environment at the location of the flower pot; and
a first adjusting submodule, configured to adjust the sunshine irradiation duration curve according to the current sunshine irradiation duration determined by the second determining submodule.

In one embodiment, the standard cultivation curve comprises a temperature variation curve, the environmental parameter comprises a current temperature range of the environment where the plant is located, and the first adjusting module may comprise:
a third determining submodule, configured to determine the current temperature range of the environment at the location of the flower pot; and
a second adjusting submodule, configured to adjust the temperature variation curve according to the current temperature range determined by the third determining submodule.

In one embodiment, the standard cultivation curve comprises a normal humidity curve, the environmental parameter comprises a current humidity range of the environment where the plant is located, and the first adjusting module may comprise:
a fourth determining submodule, configured to determine the current humidity range of the environment at the location of the flower pot; and
a third adjusting submodule, configured to adjust the normal humidity curve according to the current humidity range determined by the fourth determining submodule.

According to a third aspect, the invention relates to an apparatus for use in adjusting a plant growth environment. The apparatus includes:
a processor; and
a memory for storing instructions executable by the processor;
wherein the processor is configured to:
determine a standard cultivation curve of a plant cultivated in a flower pot;
adjust the standard cultivation curve according to an environmental parameter of an environment where the flower pot is located, to obtain an adjusted cultivation curve; and
adjust the growth environment of the plant according to the adjusted cultivation curve.

In one particular embodiment, the steps of the method for adjusting a plant growth environment are determined by computer program instructions.

Consequently, according to a fourth aspect, the invention is also directed to a computer program for adjusting a plant growth environment as described above when this program is executed by a computer.

This program can use any programing language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or a magnetic storage means, for example a diskette (floppy disk), or a hard disk.

Alternatively, the information medium can be an integrated circuit in which the program is incorporated, the circuit being adapted to execute the method in question or the be used in its execution.

The technical solutions provided in the embodiments of the present invention may achieve the following beneficial effects. A standard cultivation curve is adjusted according to an environment parameter of an environment where a flower pot is located, to obtain an adjusted cultivation curve, such that flower pots at different spatial locations are allowed to have different cultivation curves, and flower pots at the same spatial location in which different varieties of plants are cultivated are allowed to have different cultivation curves. In addition, the plant growth environment is adjusted according to the adjusted cultivation curve, such that the plants cultivated in the flower pots are capable of growing according to growth habits thereof. In this way, adaptability of the plants to different environments is enhanced, and thus the plants are prevented from going dead due to inadaptability to their environments, and users' economic cost in buying new plants is reduced. Furthermore, good growth of the plants may greatly improve users' enthusiasm in cultivating flowers and plants.

It shall be appreciated that the above general description and the detailed description hereinafter are only illustrative and interpretative, but not for limiting the present invention.

### BRIEF DESCRIPTION OF THE DRAWINGS

The accompanying drawings herein, which are incorporated into and constitute a part of the specification, illustrate embodiments consistent with the present invention, and together with the specification, serve to explain the principles of the present invention.
Fig. 1A is a flowchart illustrating a method for adjusting a plant growth environment according to an example embodiment of the present invention;
Fig. 1B is a diagram illustrating one scenario of a method for adjusting a plant growth environment according to an example embodiment of the present invention;
Fig. 1C is a diagram illustrating another scenario of a method for adjusting a plant growth environment according to an example embodiment of the present invention;
Fig. 2 is a flowchart illustrating a method for adjusting a plant growth environment according to an example embodiment 1 of the present invention;
Fig. 3 is a flowchart illustrating a method for adjusting a plant growth environment according to an example embodiment 2 of the present invention;
Fig. 4 is a block diagram illustrating an apparatus for adjusting a plant growth environment according to an example embodiment of the present invention;
Fig. 5 is a block diagram illustrating another apparatus for adjusting a plant growth environment according to an example embodiment of the present invention; and
Fig. 6 is a block diagram illustrating an apparatus for use in adjusting a plant growth environment according to an example embodiment of the present invention.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present invention. Instead, they are merely examples of apparatuses and methods consistent with aspects related to the present invention as recited in the appended claims.

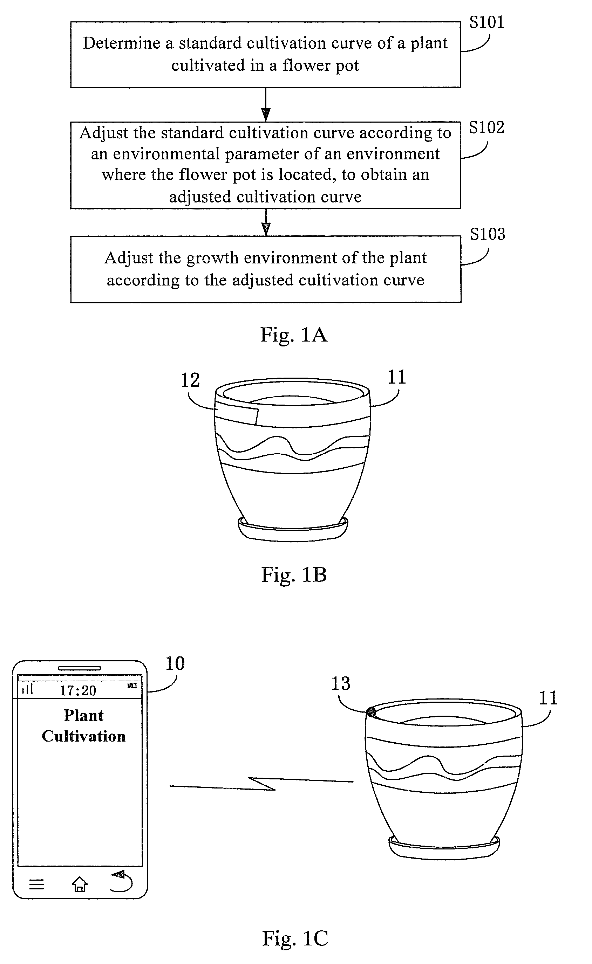

Fig. 1A is a flowchart illustrating a method for adjusting a plant growth environment according to an example embodiment of the present invention. Fig. 1B is a diagram illustrating a scenario of a method for adjusting a plant growth environment according to an example embodiment of the present invention. Fig. 1C is a diagram illustrating another scenario of a method for adjusting a plant growth environment according to an example embodiment of the present invention. The method for adjusting a plant growth environment may be performed in a terminal device (for example, a smart phone, a tablet computer, and a smart flower pot). As illustrated in Fig. 1A, the method for adjusting a plant growth environment may include the following steps S101 to S103.

In step S101, a standard cultivation curve of a plant cultivated in a flower pot is determined.

In one embodiment, the standard cultivation curve refers to an optimal trend chart of such environmental parameters as sunshine irradiation, temperature, humidity, and the like of a plant during a growth process with the time changing. The standard cultivation curve of the present invention may be surveyed and mapped via a large number of experimental data. Since the entire growth cycle of the plant includes an exponential period, a linear period and a decay period, and different growth periods have different requirements on the environmental parameters, the standard cultivation curve according to the present invention may enable the plants of the same variety to have the same standard cultivation curve, such that different users may have a uniform reference basis for the plants of the same variety during the cultivation process. Watering quantity, light irradiation duration or humidity range of the plants at corresponding stages may be prompted to the users through the standard cultivation curve, thereby facilitating users' plant cultivation.

In step S102, the standard cultivation curve is adjusted according to an environmental parameter of an environment where the flower pot is located, to obtain an adjusted cultivation curve.

In one embodiment, since different flower pots are located at different spatial locations and different spatial spaces have different environmental parameters, according to the present invention, specific environmental parameters at the specific spatial locations of the flower pots may be collected by sensors arranged on the flower pots. For example, the specific environmental parameters may include: sunshine irradiation duration, temperature, humidity and the like. The standard cultivation curve corresponding to the plant cultivated in the flower pot is adjusted according to the specific environment parameters at the spatial location of the flower pot. In this way, the flower pots at different spatial locations are allowed to have different cultivation curves, and the flower pots at the same spatial location in which different varieties of plants are cultivated are allowed to have different cultivation curves.

In step S103, the growth environment of the plant is adjusted according to the adjusted cultivation curve.

In one embodiment, if the adjusted cultivation curve indicates that the sunshine irradiation duration in the growth environment of the flower pot is relatively great, the user may be prompted to reduce the sunshine irradiation duration of the flower pot; if the adjusted cultivation curve indicates that the humidity in the growth environment of the flower pot is relatively great, the user may be prompted to reduce the indoor humidity by opening windows for ventilation or by starting the indoor air conditioner. In this way, the plant cultivated in the flower pot may have an optimal growth environment.

In one example scenario, as illustrated in Fig. 1B, a flower pot 11 is provided with a terminal device 12. The terminal device 12 may sense the environmental parameters of the environment where the flower pot 11 is located. In one embodiment, the environmental parameters sensed by the terminal device 12 may include: a sunshine irradiation duration within a defined time period, a highest temperature value and a lowest temperature value within a defined time period, a maximum humidity value and a minimum humidity value within a defined time period, and the like. In addition, the terminal device 12 may further include a display module (not shown in the drawings). The environmental parameters of the flower pot may be displayed on the display module, such that the user is capable of visually reading the environmental parameters of the flower pot. In one embodiment, the terminal device 12 may further include a communication interface (not illustrated in the drawings). Via the communication interface, a standard cultivation curve corresponding to the plant cultivated in the flower pot may be downloaded from a cloud-end server.

In another example scenario, as illustrated in Fig. 1C, the flower pot 11 is provided with a sensor apparatus 13. The sensor apparatus 13 is communicatively connected to a smart device 10. In one embodiment, the sensor apparatus 13 may include a light irradiation sensor, a temperature sensor, and a humidity sensor. The light irradiation sensor is configured to detect a sunshine irradiation duration of the flower pot within a defined time period (for example, within one day or within one year). The temperature sensor is configured to detect a temperature curve of the flower pot within a defined time period. The humidity sensor is configured to detect a humidity curve of the flower pot within a defined time period. The environmental parameters may include: a sunshine irradiation duration within a defined time period, a highest temperature value and a lowest temperature value within a defined time period, a maximum humidity value and a minimum humidity value within a defined time period, and the like. For example, the sunshine irradiation condition of the location of the flower pot, whether the sunshine is shaded by buildings, and the orientation of the flower pot may be determined according to the sunshine irradiation duration; the temperature and temperature difference of the location of the flower pot may be determined according to the highest temperature value and the lowest temperature value, for example, the flower pot at the top floor of a building is subjected to a great temperature difference, the indoor flower pot is subjected to a small temperature variation, and the flower pot in the heat-fed room is subjected to a small temperature difference; and the humidity and humidity variation of the location of the flower pot may be determined according to the maximum humidity value and the minimum humidity value. In one embodiment, the smart device 10 may download a standard cultivation curve corresponding to the plant cultivated in the flower pot from a cloud-end server.

In this embodiment, a standard cultivation curve is adjusted according to an environment parameter of an environment where a flower pot is located, to obtain an adjusted cultivation curve, such that flower pots at different spatial locations are allowed to have different cultivation curves, and flower pots at the same spatial location in which different varieties of plants are cultivated are allowed to have different cultivation curves. In addition, the plant growth environment is adjusted according to the adjusted cultivation curve, such that the plants cultivated in the flower pots are capable of growing according to growth habits thereof. In this way, adaptability of the plants to different environments is enhanced, and thus the plants are prevented from going dead due to inadaptability to their environments, and users' economic cost in buying new plants is reduced. Furthermore, good growth of the plants may greatly improve users' enthusiasm in cultivating flowers and plants.

In one embodiment, the determining a standard cultivation curve of a plant cultivated in a flower pot may include:
determining a plant variety of the plant cultivated in the flower pot; and
according to the plant variety, downloading a standard cultivation curve corresponding to the plant variety from a plant database in a cloud-end server.

In one embodiment, the standard cultivation curve includes a sunshine irradiation duration curve, the environmental parameter includes a current sunshine irradiation duration of the environment where the plant is located, and the step of adjusting the standard cultivation curve according to an environmental parameter of an environment where the flower pot is located may include:
determining the current sunshine irradiation duration of the environment at the location of the flower pot; and
adjusting the sunshine irradiation duration curve according to the current sunshine irradiation duration.

In one embodiment, the standard cultivation curve includes a temperature variation curve, the environmental parameter includes a current temperature range of the environment where the plant is located, and the step of adjusting the standard cultivation curve according to an environmental parameter of an environment where the flower pot is located may include:
determining the current temperature range of the environment at the location of the flower pot; and
adjusting the temperature variation curve according to the current temperature range.

In one embodiment, the standard cultivation curve includes a normal humidity curve, the environmental parameter includes a current humidity range of the environment where the plant is located, and the step of adjusting the standard cultivation curve according to an environmental parameter of an environment where the flower pot is located may include:
determining the current humidity range of the environment at the location of the flower pot; and
adjusting the normal humidity curve according to the current humidity range.

For details about how to adjust a plant growth environment, reference may be made to the embodiments described hereinafter.

To sum up, according to the above methods provided in embodiments of the present invention, flower pots at different spatial locations are allowed to have different cultivation curves, and flower pots at the same spatial location in which different varieties of plants are cultivated are allowed to have different cultivation curves, such that the plants cultivated in the flower pots are capable of growing according to growth habits thereof. In this way, adaptability of the plants to different environments is enhanced, and thus the plants are prevented from going dead due to inadaptability to their environments, and users' economic cost in buying new plants is reduced.

The technical solutions of the embodiments of the present invention are described below with reference to specific embodiments.

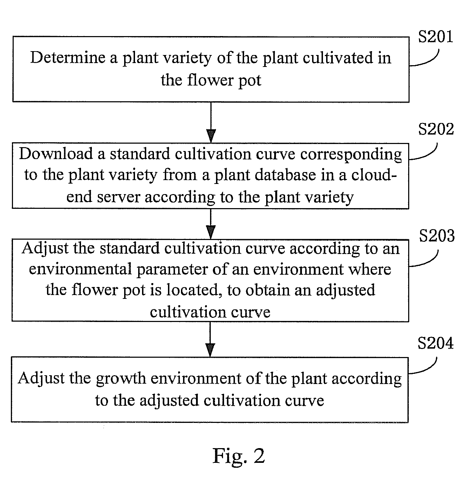

Fig. 2 is a flowchart illustrating a method for adjusting a plant growth environment according to an example embodiment 1 of the present invention. In this embodiment, example description is given by using downloading of a standard cultivation curve corresponding to a plant variety as an example and by employing the above methods provided in the embodiments of the present invention, with reference to Fig. 1B and Fig. 1C. As illustrated in Fig. 2, the method includes the following steps.

In step S201, a plant variety of the plant cultivated in the flower pot is determined.

In step S202, a standard cultivation curve corresponding to the plant variety is downloaded from a plant database in a cloud-end server according to the plant variety.

In one embodiment, as illustrated in Fig. 1B, the plant variety of a plant cultivated in the flower pot may be determined by using the terminal device 12 arranged on the flower pot 11, and a standard cultivation curve corresponding to the plant variety may be downloaded from a cloud-end server via the communication interface on the terminal device 12. For example, if epipremnum aureum is cultivated in the flower pot 11, the terminal device 12 may send the plant variety of epipremnum aureum to the cloud-end server, and the cloud-end server searches for the standard cultivation curve corresponding to epipremnum aureum, and then sends the standard cultivation curve to the terminal device 12.

In another embodiment, as illustrated in Fig. 1C, a standard cultivation curve corresponding to a plant variety may be downloaded from the cloud-end server by using the smart device 10. For example, if epipremnum aureum is cultivated in the flower pot 11, the smart device 10 may send the plant variety of epipremnum aureum to the cloud-end server, and the cloud-end server searches for the standard cultivation curve corresponding to epipremnum aureum, and then sends the standard cultivation curve to the smart device 10.

In step S203, the standard cultivation curve is adjusted according to an environmental parameter of an environment where the flower pot is located, to obtain an adjusted cultivation curve.

In step S204, the plant growth environment is adjusted according to the adjusted cultivation curve.

Description of steps S203 and S204 may be referenced to the above description of steps S102 and S103, which is thus not described herein any further.

In this embodiment, based on the beneficial technical effects achieved by the above embodiments, a standard cultivation curve corresponding to a plant variety is downloaded from the cloud-end server, such that more suitable cultivation may be applied to the plants cultivated in the flower pots, and users are capable of cultivating plants according to growth habits thereof, thereby preventing the plants from withering.

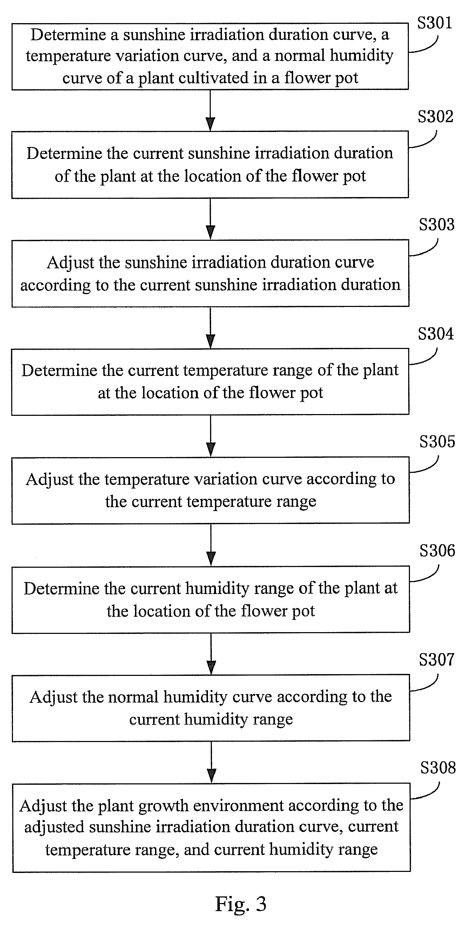

Fig. 3 is a flowchart illustrating a method for adjusting a plant growth environment according to an example embodiment 2 of the present invention. In this embodiment, example description is given by using the scenario where standard cultivation curves include a sunshine irradiation duration curve, a temperature variation curve and a normal humidity curve and environmental parameters include a sunshine irradiation duration, a temperature and a humidity as an example, and by employing the above methods provided in the embodiments of the present invention, with reference to Fig. 1B and Fig. 1C. As illustrated in Fig. 3, the method includes the following steps.

In step S301, a sunshine irradiation duration curve, a temperature variation curve, and a normal humidity curve of a plant cultivated in a flower pot are determined.

In step S302, a current sunshine irradiation duration of the environment at the location of the flower pot is determined.

In step S303, the sunshine irradiation duration curve is adjusted according to the current sunshine irradiation duration.

In one embodiment, the current sunshine irradiation duration of a flower pot within a defined time period (for example, within one day or within one year) may be detected by using a light irradiation sensor. For example, if the current sunshine irradiation duration at the spatial location of a flower pot is over a long period whereas the plant cultivated in the flower pot does not need such long sunshine irradiation duration, the sunshine irradiation duration curve may be adjusted according to the current sunshine irradiation duration, such that the user is capable of adjusting the location of the flower pot to shorten the practical sunshine irradiation duration for the plant.

In step S304, a current temperature range of the environment at the location of the flower pot is determined.

In step S305, a temperature variation curve is adjusted according to the current temperature range.

In one embodiment, a temperature curve of a flower pot within a defined time period may be detected by using a temperature sensor. For example, if the current temperature range at the spatial location of a flower pot is low whereas the plant cultivated in the flower pot needs a suitable temperature, the temperature variation curve may be adjusted according to the current temperature range, such that the user is capable of adjusting the temperature of the environment where the flower pot is located, to prevent the plant cultivated in the flower pot from being frozen to death.

In step S306, a current humidity range of the environment at the location of the flower pot is determined.

In step S307, a normal humidity curve is adjusted according to the current humidity range.

In one embodiment, a normal humidity curve of a flower pot within a defined time period may be detected by using a humidity sensor. For example, if the current humidity range at the spatial location of a flower pot is over-great whereas the plant cultivated in the flower pot needs a relatively dry environment, the normal humidity curve may be adjusted according to the current humidity range, such that the user is capable of lowering the humidity of the environment where the flower pot is located, to ensure that the plant is cultivated in a dry environment.

In step S308, the plant growth environment is adjusted according to the adjusted sunshine irradiation duration curve, current temperature range, and current humidity range.

In this embodiment, based on the beneficial technical effects achieved by the above embodiments, a plant growth environment is adjusted according to an adjusted sunshine irradiation duration curve, current temperature range, and current humidity range. In this way, the sunshine irradiation duration, the temperature range and the humidity range during the plant growth process are quantitatively managed, such that users are capable of more visually monitoring the plant growth process, and thus it is ensured that the plants grow according to growth habits thereof.

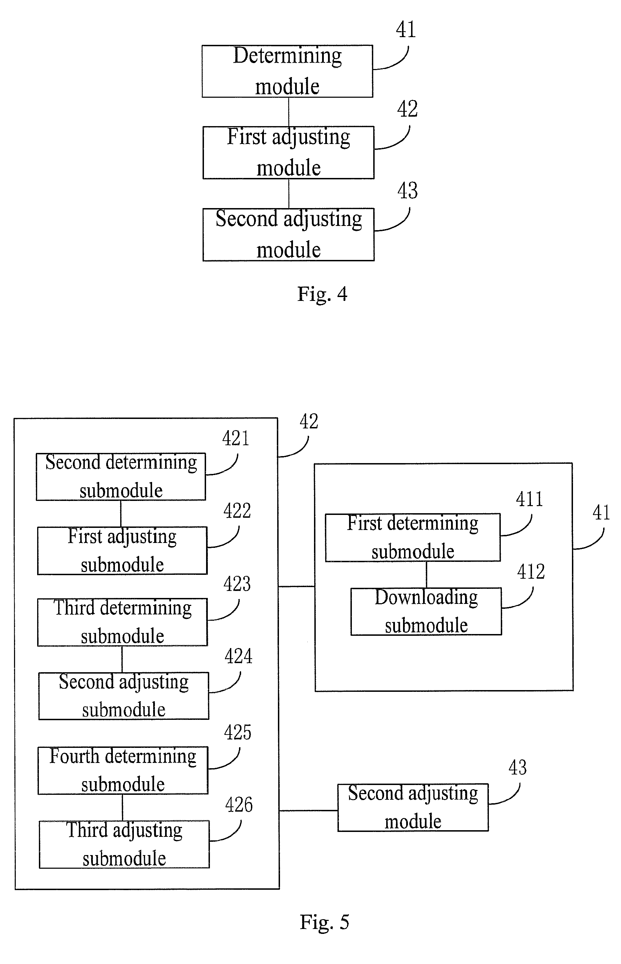

Fig. 4 is a block diagram illustrating an apparatus for adjusting a plant growth environment according to an example embodiment of the present invention. As illustrated in Fig. 4, the apparatus for adjusting a plant growth environment includes:
a determining module 41, configured to determine a standard cultivation curve of a plant cultivated in a flower pot;
a first adjusting module 42, configured to adjust the standard cultivation curve determined by the determining module 41 according to an environmental parameter of an environment where the flower pot is located, to obtain an adjusted cultivation curve; and
a second adjusting module 43, configured to adjust the growth environment of the plant according to the cultivation curve adjusted by the first adjusting module 42.

Fig. 5 is a block diagram illustrating another apparatus for adjusting a plant growth environment according to an example embodiment of the present invention. Based on the embodiment as illustrated in Fig. 4, in one embodiment, the determining module 41 may include:
a first determining submodule 411, configured to determine a plant variety of the plant cultivated in the flower pot; and
a downloading submodule 412, configured to download a standard cultivation curve corresponding to the plant variety from a plant database in a cloud-end server according to the plant variety determined by the first determining submodule 411.

In one embodiment, the standard cultivation curve includes a sunshine irradiation duration curve, the environmental parameter includes a current sunshine irradiation duration of the environment where the plant is located, and the first adjusting module 42 may include:
a second determining submodule 421, configured to determine the current sunshine irradiation duration of the environment at the location of the flower pot; and
a first adjusting submodule 422, configured to adjust the sunshine irradiation duration curve according to the current sunshine irradiation duration determined by the second determining submodule 421.

In one embodiment, the standard cultivation curve includes a temperature variation curve, the environmental parameter includes a current temperature range of the environment where the plant is located, and the first adjusting module 42 may include:
a third determining submodule 423, configured to determine the current temperature range of the environment at the location of the flower pot; and
a second adjusting submodule 424, configured to adjust the temperature variation curve according to the current temperature range determined by the third determining submodule 423.

In one embodiment, the standard cultivation curve includes a normal humidity curve, the environmental parameter includes a current humidity range of the environment where the plant is located, and the first adjusting module 42 may include:
a fourth determining submodule 425, configured to determine the current humidity range of the environment at the location of the flower pot; and
a third adjusting submodule 426, configured to adjust the normal humidity curve according to the current humidity range determined by the fourth determining submodule 425.

With respect to the apparatuses in the above embodiments, the specific implementations of operations executed by various modules thereof have been described in detail in the embodiments illustrating the methods, which are not described herein any further.

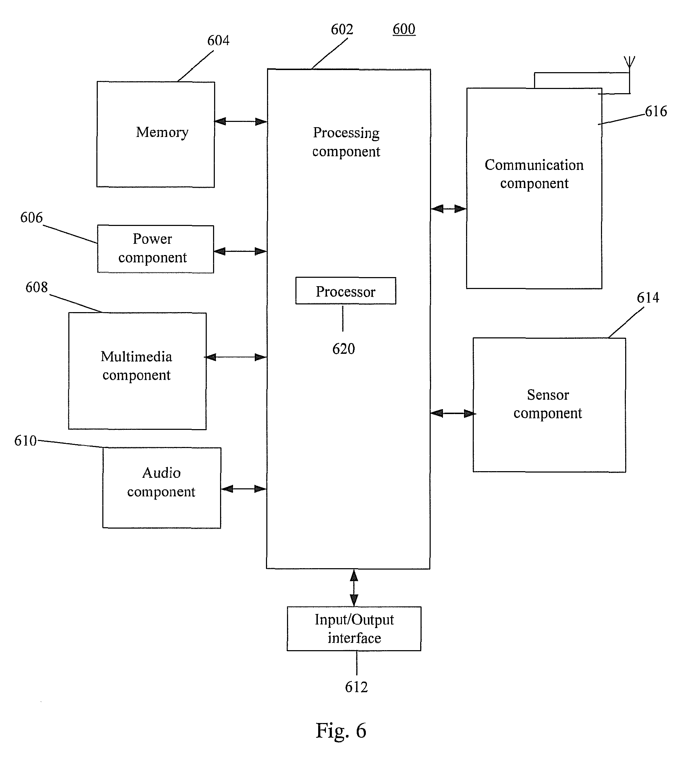

Fig. 6 is a block diagram illustrating an apparatus for use in adjusting a plant growth environment according to an example embodiment of the present invention. For example, the apparatus 600 may be a mobile phone, a computer, a digital broadcast terminal, a messaging device, a gaming console, a tablet, a medical device, exercise equipment, a personal digital assistant, and the like.

Referring to Fig. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 620 to execute instructions to perform all or a part of the steps in the above-described methods. In addition, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operations of the apparatus 600. Examples of such data include instructions for any application or method operated on the apparatus 600, contact data, phonebook data, messages, pictures, videos, and the like. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power supplies, and other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive external multimedia data while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, or a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and a peripheral interface module, such as a keyboard, a click wheel, a button, or the like. The buttons may include, but are not limited to, a home button, a volume button, a starting button, and a locking button.

The sensor component 614 includes one or more sensors to provide status assessments of various aspects of the apparatus 600. For example, the sensor component 614 may detect an open/closed status of the apparatus 600, relative positioning of components, e.g., the display and the keypad, of the apparatus 600, a change in position of the sensor component 614 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communications, wired or wirelessly, between the apparatus 600 and other devices. The apparatus 600 may access a wireless network based on a communication standard, such as WiFi, 2G, or 3G, or a combination thereof. In one example embodiment, the communication component 616 receives a broadcast signal or broadcast associated information from an external broadcast management system via a broadcast channel. In one example embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In example embodiments, there is also provided a non-transitory computer-readable storage medium including instructions, such as included in the memory 604, executable by the processor 620 in the apparatus 600, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present invention will be apparent to those skilled in the art from consideration of the specification and practice disclosed herein. This application is intended to cover any variations, uses, or adaptations of the present invention following the general principles thereof and including such departures from the present invention as coming within common knowledge or customary technical means in the art. It is intended that the specification and embodiments be considered as exemplary only, with a true scope of the present invention being indicated by the appended claims.

It will be appreciated that the present invention is not limited to the exact construction that has been described above and illustrated in the accompanying drawings, and that various modifications and changes can be made without departing from the scope thereof. The scope of the present invention is only defined by the appended claims.

## Claims

1. A method for adjusting a plant growth environment, comprising:
determining (S101) a standard cultivation curve of a plant cultivated in a flower pot;
adjusting (S102, S203) the standard cultivation curve according to an environmental parameter of an environment where the flower pot is located, to obtain an adjusted cultivation curve; and
adjusting (S103, S204) the growth environment of the plant according to the adjusted cultivation curve.

2. The method according to claim 1, wherein the step (S101) of determining a standard cultivation curve of a plant cultivated in a flower pot comprises:
determining (S201) a plant variety of the plant cultivated in the flower pot; and
downloading (S202) a standard cultivation curve corresponding to the plant variety from a plant database in a cloud-end server according to the plant variety.

3. The method according to claim 1, wherein the standard cultivation curve comprises a sunshine irradiation duration curve, the environmental parameter comprises a current sunshine irradiation duration of the environment where the plant is located, and the step (S102, S203) of adjusting the standard cultivation curve according to an environmental parameter of an environment where the flower pot is located comprises:
determining (S302) the current sunshine irradiation duration of the environment at the location of the flower pot; and
adjusting (S303) the sunshine irradiation duration curve according to the current sunshine irradiation duration.

4. The method according to claim 1, wherein the standard cultivation curve comprises a temperature variation curve, the environmental parameter comprises a current temperature range of the environment where the plant is located, and the step (S102, S203) of adjusting the standard cultivation curve according to an environmental parameter of an environment where the flower pot is located comprises:
determining (S304) the current temperature range of the environment at the location of the flower pot; and
adjusting (S305) the temperature variation curve according to the current temperature range.

5. The method according to claim 1, wherein the standard cultivation curve comprises a normal humidity curve, the environmental parameter comprises a current humidity range of the environment where the plant is located, and the step (S102, S203) of adjusting the standard cultivation curve according to an environmental parameter of an environment where the flower pot is located comprises:
determining (S306) the current humidity range of the environment at the location of the flower pot; and
adjusting (S307) the normal humidity curve according to the current humidity range.

6. An apparatus for adjusting a plant growth environment, comprising:
a determining module (41), configured to determine a standard cultivation curve of a plant cultivated in a flower pot;
a first adjusting module (42), configured to adjust the standard cultivation curve determined by the determining module (41) according to an environmental parameter of an environment where the flower pot is located, to obtain an adjusted cultivation curve; and
a second adjusting module (43), configured to adjust the growth environment of the plant according to the cultivation curve adjusted by the first adjusting module (42).

7. The apparatus according to claim 6, wherein the determining module (41) comprises:
a first determining submodule (411), configured to determine a plant variety of the plant cultivated in the flower pot; and
a downloading submodule (412), configured to download a standard cultivation curve corresponding to the plant variety from a plant database in a cloud-end server according to the plant variety determined by the first determining submodule (411).

8. The apparatus according to claim 6, wherein the standard cultivation curve comprises a sunshine irradiation duration curve, the environmental parameter comprises a current sunshine irradiation duration of the environment where the plant is located, and the first adjusting module (42) comprises:
a second determining submodule (421), configured to determine the current sunshine irradiation duration of the environment at the location of the flower pot; and
a first adjusting submodule (422), configured to adjust the sunshine irradiation duration curve according to the current sunshine irradiation duration determined by the second determining submodule (421).

9. The apparatus according to claim 6, wherein the standard cultivation curve comprises a temperature variation curve, the environmental parameter comprises a current temperature range of the environment where the plant is located, and the first adjusting module (42) comprises:
a third determining submodule (423), configured to determine the current temperature range of the environment at the location of the flower pot; and
a second adjusting submodule (424), configured to adjust the temperature variation curve according to the current temperature range determined by the third determining submodule (423).

10. The apparatus according to claim 6, wherein the standard cultivation curve comprises a normal humidity curve, the environmental parameter comprises a current humidity range of the environment where the plant is located, and the first adjusting module (42) comprises:
a fourth determining submodule (425), configured to determine the current humidity range of the environment at the location of the flower pot; and
a third adjusting submodule (426), configured to adjust the normal humidity curve according to the current humidity range determined by the fourth determining submodule (425).

11. A computer program including instructions for executing the steps of a method for adjusting a plant growth environment according to any one of claims 1 to 5 when said program is executed by a computer.

12. A recording medium readable by a computer and having recorded thereon a computer program including instructions for executing the steps of a method for adjusting a plant growth environment according to any one of claims 1 to 5.
